# EUROPEAN PATENT APPLICATION

(11) **EP 1 524 158 A1**
(43) Date of publication of application: **20.04.2005**
(21) Application number: 04254932.9
(22) Date of filing: 17.08.2004
(51) Int. Cl.: B60R 21/04

(54) **Electrical connection structures in additional unit for vehicles and in inner mirror**

(30) Priority: 17.10.2003 JP 2003358518
(71) Applicant: Murakami Corporation, Shizuoka-shi, Shizuoka (JP)
(72) Inventor: Wada, Makoto Murakami Corporation, Fujieda-shi Shizuoka (JP)
(74) Representative: Piésold, Alexander J.

(57) **Abstract**

Disclosed is an electrical connection structure in an inner mirror, which facilitates installation of the inner mirror and establishment of the connection therein. A button (attachment) and a first current-carrying member are provided on a windshield. The inner mirror includes a base, a second current-carrying member and an electrical-power driven portion. When the base of the inner mirror is made to slide onto the button, connecting portions of the first and second current-carrying member come in contact with each other, so that they are electrically connected to each other. Consequently, the electrical-power driven portion is supplied with electrical power from a power source external to the inner mirror through the first and second current-carrying portions.

## Description

A structure consistent with the present invention relates to an electrical connection structure in an additional unit for vehicles which is to be attached on an inner face of a vehicle. Further, the structure relates to an electrical connection structure in an inner mirror.

Some of inner mirrors (i.e. room mirrors) for vehicles have an electrical-power driven portion including an EC device of an anti-dazzle mirror. In one form of the inner mirrors of this type, an inner mirror is attached on a windshield of a vehicle, and is supplied with electrical power from a battery of the vehicle (refer to Japanese Unexamined utility model Publication No. 3-19741 (page 6, line 14 to page 8, line 9)).

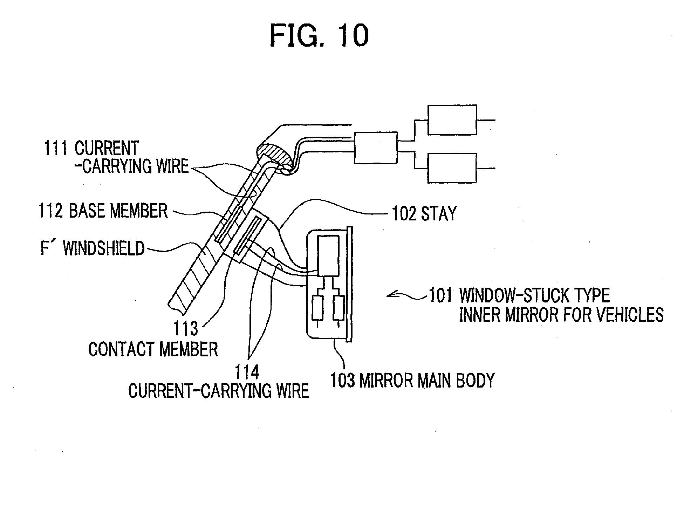

Fig. 10 shows a cross-sectional side of a window-stuck type inner mirror described in the above Publication. A window-stuck type inner mirror 101 (hereinafter, referred to as "inner mirror 101") is adapted to be placed on a windshield F' of a vehicle, and includes a stay 102 and a mirror main body 103 as main components. The windshield F' is composed of sheets of glass, and has a current-carrying wire 111 and a base member 112 that are disposed between the sheets of glass. The stay 102 has a contact member 113 and a current-carrying wire 114 arranged therein. An electrical-power driven portion in the mirror main body 103 is supplied with electrical power from a battery of the vehicle through the current-carrying wire 111, the base member 112, the contact member 113 and the current-carrying wire 114.

The above-described inner mirror 101, however, has following problems.
(a) A structure in which the base member 112 disposed into the windshield F' is not in direct contact with the contact member 113 results in a loss of electrical power.
(b) Installation of the current-carrying wire 111 and the base member 112 into the windshield F' causes a lot of man-hours and costs.

Moreover, similar problems also arise in installing products equipped with an electrical-power driven portion (cameras, monitors, etc.) in a main body (windshield, etc.) of a vehicle. Here, these products and the inner mirror are collectively called "additional unit for vehicles".

The present invention has been made in view of the above problems. A feature of the present invention is to provide electrical connection structures in an additional unit for vehicles and in an inner mirror which suppress a loss of electrical power thereof and facilitates establishment of the electrical connection in installation thereof.

According to an aspect of the present invention, an electrical connection structure is constituted as follows.
(a) an additional unit for a vehicle, which includes a base and an electrical-power driven portion;
(b) an attachment to which the base is attachable, and which is provided on a main body of the vehicle;
(c) a first current-carrying member which is routed along the main body of the vehicle, and which has a connecting portion near the attachment, the first current-carrying member being connected to a power source external to the additional unit; and
(d) a second current-carrying member which is routed on the additional unit, and which has, around the base, a connecting portion connectable to the connecting portion of the first current-carrying member, the second current-carrying member being connected to the electrical-power driven portion.

Here, the electrical-power driven portion is supplied with electrical power from the power source through the first and second current-carrying members.

Examples of "additional unit for vehicles" in the present invention include inner mirrors, cameras, monitors and receivers for ETCs which are to be attached on an inner face of main body of a vehicle. Also, examples of "inner face" include faces of windshield, of roof, and of dashboard. A location where the additional unit is attached is not limited to the inner side face, but may be an outer face of main body of a vehicle.

The term "electrical-power driven portion" in the present invention collectively means a member which is provided in the additional unit for vehicles and which is driven by means of electrical power. Assuming that the additional unit is an inner mirror, the electrical-power driven portion is an EC device or a liquid crystal device of the mirror, an ETC sensor in a mirror housing, or the like. In the present invention, the electrical-power driven portion is supplied with electrical power from a power source (battery, etc.) provided outside the additional unit. In this way, the external supply of power contributes to the stabilization of the power.

The term "current-carrying member" in the present invention means a metal wire or a flexible board, for example.

The term "connection" in the present invention means an electrical connection.

According to the above structure, since the first current-carrying member is routed along the main body of the vehicle, it is possible to facilitate the establishment of the connection, to suppress the loss of electrical power due to the direct connection between the connecting portions of the first and second current-carrying members, and to ease the connection in installation.

In the electrical connection structure in the additional unit for vehicles, the connecting portions of the first and second current-carrying members come in contact with each other by attaching the base to the attachment, so that the connecting portions of the first and second current-carrying members are connected to each other.

As to the connection of the additional unit, in fact, the first and second current-carrying members have respective connecting portions in a location where the first and second current-carrying members are in contact with each other. By such structure, the connecting portions of the first and second current-carrying members are connected to each other by attaching the additional unit to the attachment, thus facilitating the connection.

According to another aspect of the present invention, an electrical connection structure is constituted as follows.
(a) an additional unit for a vehicle, which includes a base and an electrical-power driven portion;
(b) an attachment to which the base is attachable, and which is provided on a main body of the vehicle;
(c) a first current-carrying member which is routed along the main body of the vehicle, and which is connected to the attachment and a power source external to the additional unit; and
(d) a second current-carrying member which is routed on the additional unit, and which has, around the base, a connecting portion connectable to the attachment, the second current-carrying member being connected to the electrical-power driven portion.

Here, the electrical-power driven portion is supplied with electrical power from the power source through the first current-carrying member, the attachment and the second current-carrying member.

This structure is characterized in that the attachment is present between the first and second current-carrying members. It is preferable that this attachment is partially or entirely formed of a conductive material (i.e. metal).

According to this structure, since the first current-carrying member is routed along the main body of the vehicle, it is possible to facilitate the routing, to suppress the loss of electrical power due to a direct connection between the connecting portions of the attachment and of the second current-carrying member, and to ease the connection in installation of the additional unit.

Further, since the connecting portions of the attachment and of the second current-carrying member are connected to each other, it is possible to enlarge the connecting area, which results in ease of the connection.

In the electrical connection structure in an additional unit for vehicles, the connecting portions of the attachment and the second current-carrying member come in contact with each other by attaching the base to the attachment, so that the connecting portions of the attachment and the second current-carrying member are connected to each other.

As to the connection of the additional unit, in fact, the attachment and the second current-carrying member have respective connecting portions in a location where the attachment and the second current-carrying member are in contact with each other. By such structure, the connecting portions of the attachment and of second current-carrying member are connected to each other by attaching the additional unit to the attachment, thus easing the electrical connection.

According to further aspect of the present invention, an electrical connection structure is constituted as follows.
(a) an inner mirror which includes a base and an electrical-power driven portion;
(b) an attachment to which the base is attachable, and which is provided on a main body of the vehicle;
(c) a first current-carrying member which is routed along the main body of the vehicle, and which has a connecting portion near the attachment, the first current-carrying member being connected to a power source external to the inner mirror; and
(d) a second current-carrying member which is routed on the inner mirror, and which has, around the base, a connecting portion connectable to the connecting portion of the first current-carrying member, the second current-carrying member being connected to the electrical-power driven portion.

Here, the electrical-power driven portion is supplied with electrical power from the power source through the first and second current-carrying members.

In the electrical connection structure in the inner mirror, the connecting portions of the first and second current-carrying members come in contact with each other by attaching the base to the attachment, so that the connecting portions of the first and second current-carrying members are connected to each other.

According to still another aspect of the present invention, an electrical connection structure is constituted as follows.
(a) an inner mirror which includes a base and an electrical-power driven portion;
(b) an attachment to which the base is attachable, and which is provided on a main body of the vehicle;
(c) a first current-carrying member which is routed along the main body of the vehicle, and which is connected to the attachment and a power source external to the inner mirror; and
(d) a second current-carrying member which is routed on the inner mirror, and which has, around the base, a connecting portion connectable to the attachment, the second current-carrying member being connected to the electrical-power driven portion.

Here, the electrical-power driven portion is supplied with electrical power from the power source through the first current-carrying member, the attachment and the second current-carrying member.

In the electrical connection structure in the inner mirror, the connecting portions of the attachment and of the second current-carrying member come in contact with each other by attaching the base to the attachment, so that the connecting portions of the attachment and of the second current-carrying member are connected to each other.

Generally, if an inner mirror is equipped with an electrical-power driven portion, then the electrical-power driven portion is supplied with electrical power from a power source external to the inner mirror, which is prone to cause the above-described problems. For this reason, the present invention is able to be appropriately applied to inner mirrors.

With the present invention, it is possible to provide the electrical connection structures in the additional unit for vehicles and in the inner mirror which reduce the loss of electrical power and to facilitate the electrical connection in the attachment.

Preferred embodiments of the present invention will now be described by way of example only and with reference to the accompanying drawings in which:
FIG. 1 is an exploded perspective view depicting an inner mirror according to a first embodiment of the present invention;
FIG. 2 is a perspective view depicting the inner mirror of Fig. 1 as viewed from a forward direction through a windshield;
FIG. 3 is a cross-sectional side view depicting the inner mirror of Fig. 1 prior to an installation;
FIG. 4 is a cross-sectional side view depicting the inner mirror of Fig. 1 subsequent to an installation;
FIG. 5 is a cross-sectional side view depicting an inner mirror according to a second embodiment of the present invention;
FIG. 6 is a cross-sectional side view depicting an inner mirror according to a third embodiment of the present invention;
FIG. 7 is a cross-sectional side view depicting an inner mirror according to a fourth embodiment of the present invention prior to an installation;
FIG. 8 is a cross-sectional side view depicting the inner mirror of Fig. 7 subsequent to an installation;
FIG. 9 is a cross-sectional side view depicting an inner mirror according to a fifth embodiment of the present invention subsequent to an installation; and
FIG. 10 is a cross-sectional side view depicting a window stuck type inner mirror for vehicles of a related art.

Embodiments of the present invention will be described below with reference to attached drawings as appropriate in the case where an additional unit for vehicles is an inner mirror. The same reference numerals are given to the same parts, and duplicate description therefor will be omitted. Position and orientation herein will be described as a reference of those of an inner mirror with being attached, if not stated otherwise.

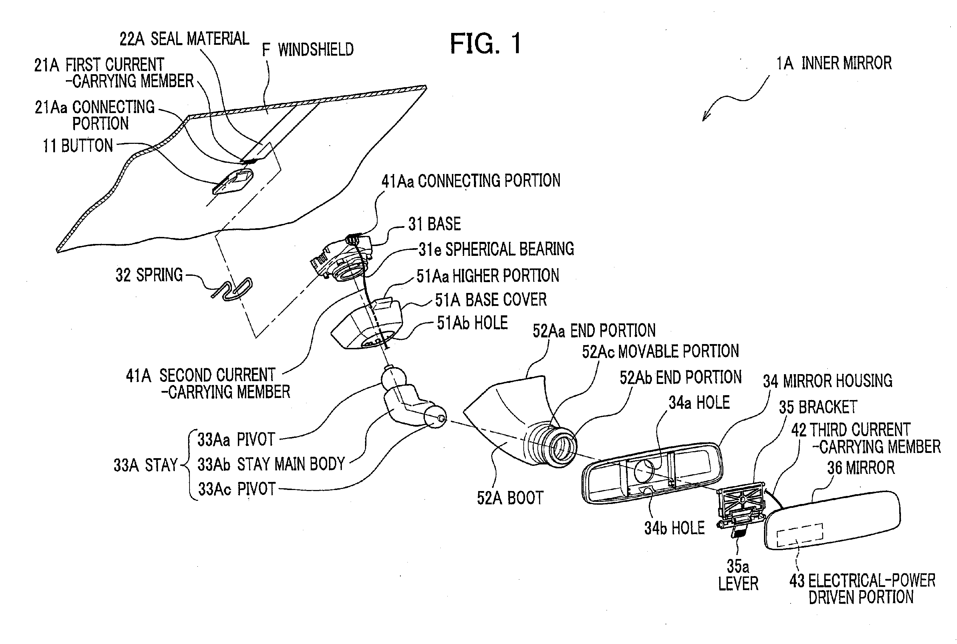

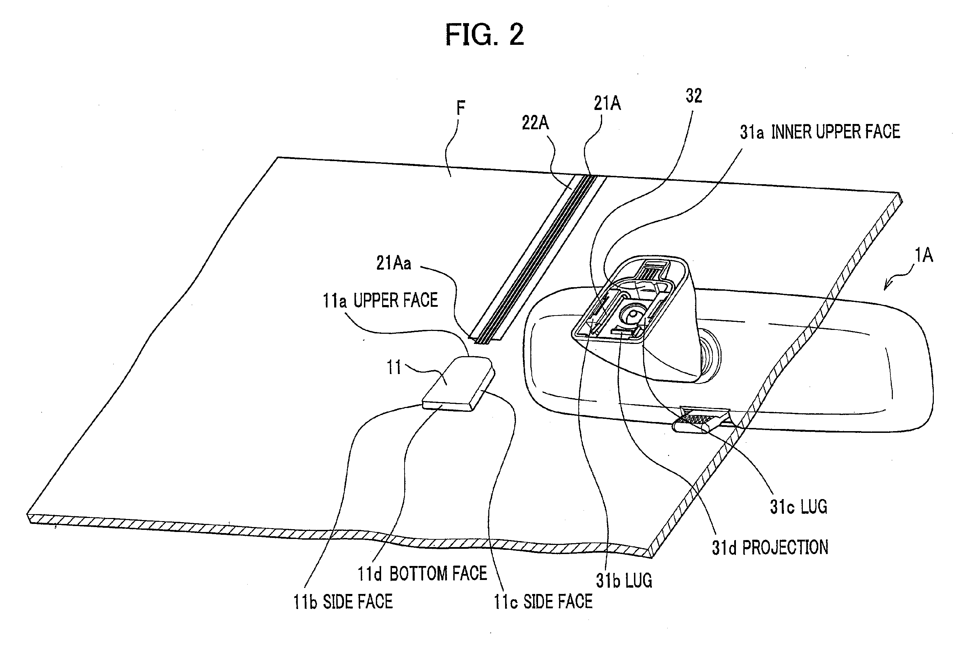

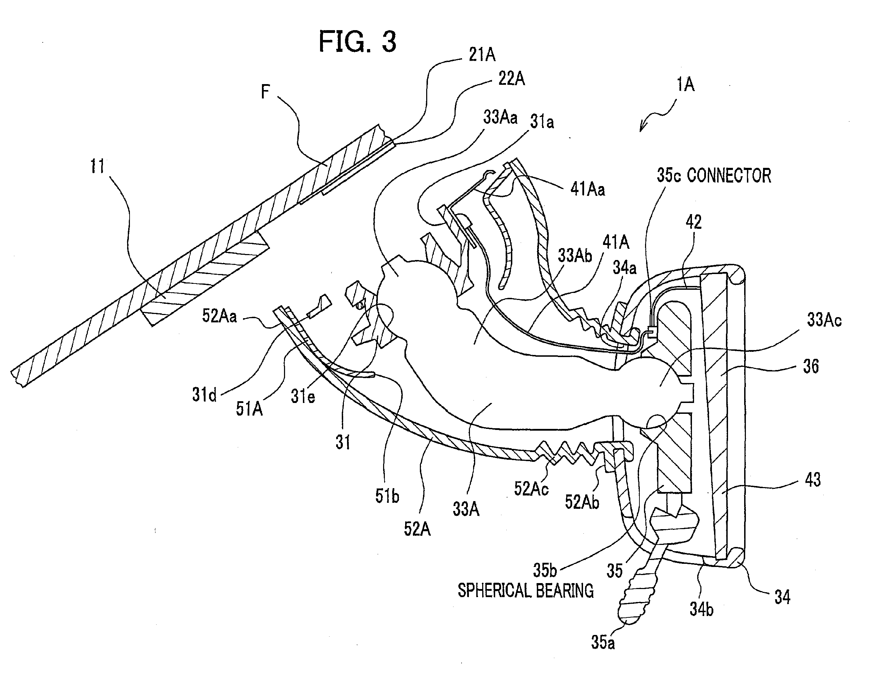

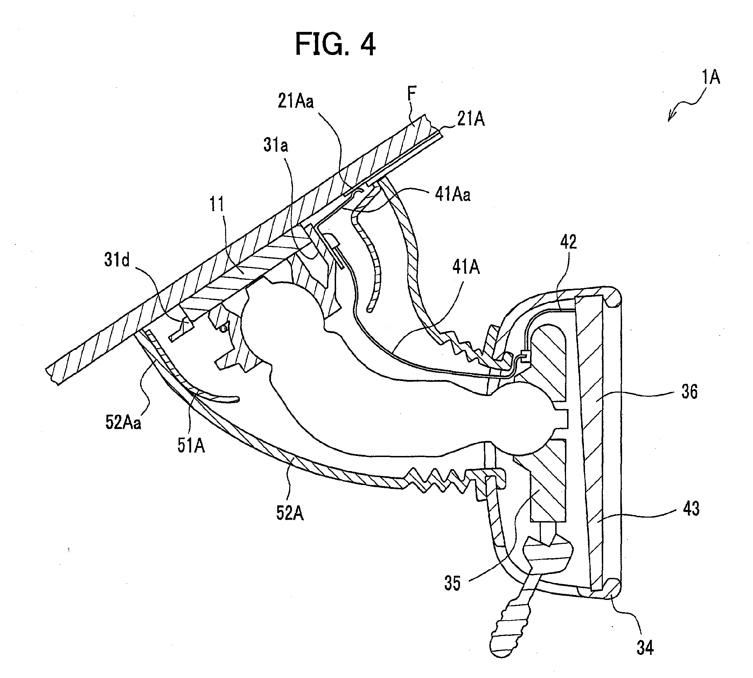

First, an electrical connection structure in an inner mirror according to a first embodiment of the present invention will be described with reference to Figs. 1 to 4. FIG. 1 is an exploded perspective view depicting an inner mirror according to a first embodiment of the present invention; FIG. 2 is a perspective view depicting the inner mirror of Fig. 1 as viewed from a forward direction through a windshield; FIG. 3 is a cross-sectional side view depicting the inner mirror of Fig. 1 prior to an installation; and FIG. 4 is a cross-sectional side view depicting the inner mirror of Fig. 1 subsequent to an installation.

An inner mirror 1A of the first embodiment is configured to be detachably attached to a windshield F of a vehicle. As shown in Fig. 1, the windshield F is provided with a button 11, a first current-carrying member 21A and a seal material 22A. Meanwhile, the inner mirror 1A includes, as main components, a base 31, a spring 32, a stay 33A, a mirror housing 34, a bracket 35, mirror 36, a second current-carrying member 41A, a third current-carrying member 42, an electrical-power driven portion 43, a base cover 51A and a boot 52A.

First, each individual component on the periphery of the windshield F will be described with reference to Fig. 2. A metal button 11 serves as an attachment, and includes an upper face 11a, side faces 11b, 11c and a bottom face 11d. This button 11 is fixed on a top center of the windshield F on the inner side. The fixing technique may be any known one, but an adhesive agent is used in this embodiment.

A first current-carrying member 21A is constituted of four printed wires attached on the face of the windshield on the inner side. An end of the first current-carrying member 21A is positioned an upper edge of the windshield F, and is connected to a current-carrying member (not shown) which is routed to a roof of a vehicle and which is connected to a power source (battery, etc) , whereas the other end is positioned near the button 11 as a connecting portion 21Aa.

An example of techniques will be described of forming this first current-carrying member 21A on the face of the windshield F. First, a black paint is coated on the face of the windshield F on the inner side. Second, silver to be the printed wires is applied to the black-coated face. Third, a black paint is coated on the silver face again. Finally, the coated face is baked. With the above steps, the first current-carrying member 21A is formed.

A seal material 22A is disposed on the inner side of the windshield F, with covering the first current-carrying member 21A aside the connecting portion 21Aa. The seal member 22A blinds the first current-member 21A aside the connecting portion 21Aa from the inner side, and can prevent deterioration and damage of the first current-member 21A aside the connecting portion 21Aa.

Next, each individual component of the inner mirror 1A will be described with reference to Fig. 1 (refer to Figs 2, 3 as appropriate). A base 31, formed of a hard resin member, includes an inner upper face 31a, a couple of lugs 31b, 31c and a projection 31d on the side of the button 11 (refer to Fig. 2). Additionally, the base 31 includes a spherical bearing 31e on the side of the stay 33.

The spring 32 is fitted to the lugs 31b, 31c of the base 31 (refer to Fig. 2).

A technique will be described of attaching the base 31 to the button 11 with reference to Fig. 2. The base 31 is attached to the button 11 by sliding the lugs 31b, 31c of the base 31 from an upper side of the button 11 along the side faces 11b, 11c of the button 11. After the completion of the slide, the inner upper face 31a of the base 31 is in contact with the upper face 11a of the button 11, and the proj ection 31d is in contact with the bottom face 11d. Also, the spring 32 is widened by the side faces 11b, 11c. The widened spring 32 urges the side faces 11b, 11c of the button 11 in the center direction, enhancing the urged force. Here, the detachment of the base 31 from the button 11 is performed following the above steps in reverse. As described above, simply by sliding the base 31 onto the button 11, the attachment/detachment can be performed.

Referring back to Fig. 1, each individual component of the inner mirror 1A will be described (refer to Figs. 2, 3 as appropriate). The stay 33A, formed of a hollow hard resin member, includes a pivot 33Aa, a stay main body 33Ab and a pivot 33Ac.

The pivot 33Aa is formed into a substantially spherical shape, and is slidably coupled to the spherical bearing 31e of the base 31.

The stay main body 33Ab, which is a pole part between the pivots 33Aa, 33Ac, is bent substantially at its center.

The pivot 33Ac is formed into a substantially spherical shape, and is slidably coupled to the spherical bearing 35b of the bracket 35.

The mirror housing 34, which is a hard resin member for accommodating the bracket 35, the mirror 36, etc, is provided with holes 34a, 34b.

The hole 34a, which is provided in the center of the mirror housing 34, has the pivot 33Ac of the stay 33A and the second current-carrying member 41A passing therethrough, and an end portion 52Ab of the boot 52A fitted thereinto.

Meanwhile, the hole 34b, which is provided in the bottom of the mirror housing 34, has a lever 35a of the bracket 35 protruding therefrom.

The bracket 35, which is a member for supporting the mirror 36, includes a lever 35a, a spherical bearing 35b and connector 35c.

The lever 35a, by which an angle of the mirror 36 is changed to thereby produce or prevent anti-dazzle effect using a prism, protrudes outwardly from the hole 34b of the mirror housing 34.

The spherical bearing 35b slidably supports the pivot 33Ac.

The connector 35c, which is provided on the bracket 35 on the side of the button 11, electrically connects the second current-carrying member 41A with the third current-carrying member 42.

The mirror 36, formed of a prism mirror, incorporates an electrical-power driven portion 43.

The second current-carrying member 41A, which is a metal wire routed along the base 31 and the stay 33A, is coated with a harness. An end of the second current-carrying member 41A forms the connecting portion 41Aa fixed on the base 31. The connecting portion 41Aa is positioned corresponding to the connecting portion 21Aa. The connecting portions 21Aa, 41Aa are connected to each other in a contact manner, and this connection is thus disconnectable. The other end is connected to the third current-carrying member 42 through the connector 35c.

The third current-carrying member 42, which is a member for connecting the second current-carrying member 41A with the electrical-power driven portion 43, is aimed at facilitating assembly of individual components in the mirror housing 34, and may be configured to directly connect the second current-carrying member 41A with the electrical-power driven portion 43.

The electrical-power driven portion 43 is a member driven by means of electrical power, and is a liquid crystal device that is incorporated in the mirror 36 and that displays letters or numbers in this embodiment. Alternatively, the electrical-power driven portion 43 may be an EC device or ETC sensor incorporated in the mirror housing 34.

The base cover 51A, formed of a hard resin member, covers the base 31 and pivot 33Aa, and includes a higher portion 51Aa and a hole 51Ab.

The higher portion 51Aa, which is a portion protruding from the main body of the base cover 51A, covers the connecting portion 41Aa.

The hole 51Ab has the stay 33A and the second current-carrying member 41A passing therethrough.

The boot 52A, which is a tubular material formed of a flexible material, and includes end portions 52Aa, 52Ab and a movable portion 52Ac. Examples of such flexible materials include thermoplastic elastomer and ethylene propylene diene monomer (EPDM). The boot 52A can be deformed, thanks to its flexible property, following the motion of the stay 33A involved by adjustment of angle of the inner mirror 1A.

The end 52Aa covers the base cover 51A.

Meanwhile, the end portion 52Ab is fitted into the hole 34a of the mirror housing 34.

The movable portion 52Ac, which is a portion pleated like an accordion and formed near the end portion 52Ab, can be deformed following the motion of the pivot 33Ac, thanks to its shape of covering the pivot 33Ac of the stay 33A.

The boot 52A can be deformed following the motion of the movable portion 52Ac, due to its soft, expanding property. Further, covering the second current-carrying member 41A with the boot 52A enables improvement in appearance of the inner mirror 1A. Also, covering the attaching part between the button 11 and the base 31 can result in enhanced appearance of the inner mirror 1A as well as prevention of damage of the attaching part. Furthermore, fitting of the boot 52A into the hole 34a of the mirror housing 34 allows to prevent entry of dust, etc. through the hole 34a.

Next, an electrical connection associated with the attachment of the inner mirror 1A will be described with reference to Fig. 4. As described above, as a result of attaching the base 31 of the inner mirror 1A to the button 11 in a sliding manner, the connecting portion 21Aa of the first current-carrying member 21A comes into contact with the connecting portion 41Aa of the second current-carrying member 41A, thereby establishing the electrical connection therebetween. Consequently, the electrical-power driven portion 43 is supplied with power from a power source external to the inner mirror 1A through the first, second and third current-carrying members 21A, 41A and 42. In this situation, the first and second current-carrying members 21A, 41A are in direct contact with each other, so that the loss of the electrical power can be suppressed. Further, the first current-carrying member 21A is disposed on the face of the windshield F on the inner side, thereby facilitating routing of the first current-carrying member 21A. Moreover, when the inner mirror 1A is detached from the windshield F, the first and second current-carrying members 21A, 41A are disconnected from each other. Accordingly, the removal of the inner mirror 1A is not inhibited.

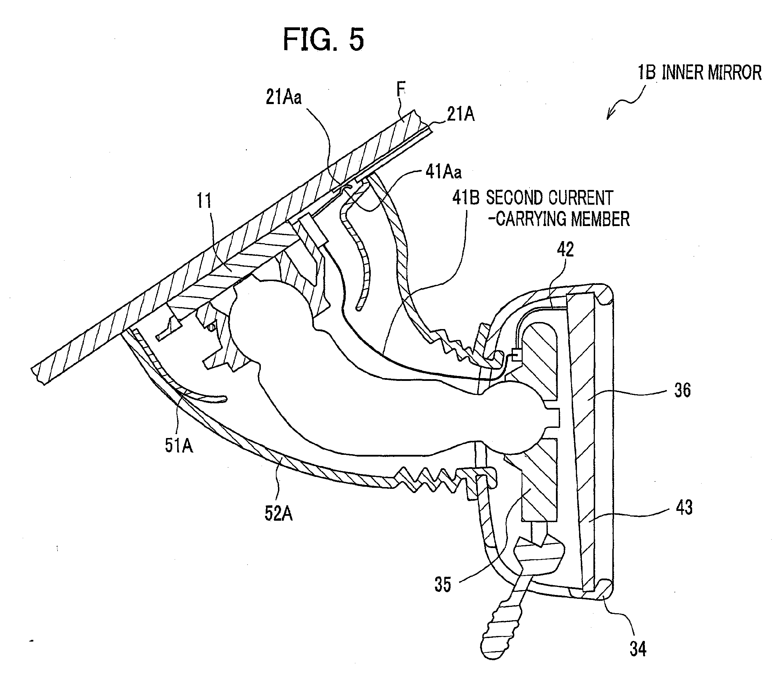

A description will be given of an electrical connection structure in inner mirror according to a second embodiment of the present invention with reference to Fig. 5, focusing on differences from that of the inner mirror 1A according to the first embodiment. FIG. 5 is a cross-sectional side view depicting an inner mirror according to the second embodiment of the present invention after the installation.

An inner mirror 1B includes a second current-carrying member 41B which is formed of a flexible board. Even if the second current-carrying member 41B of the flexible board is routed as it is, it is protected by the boot 52A.

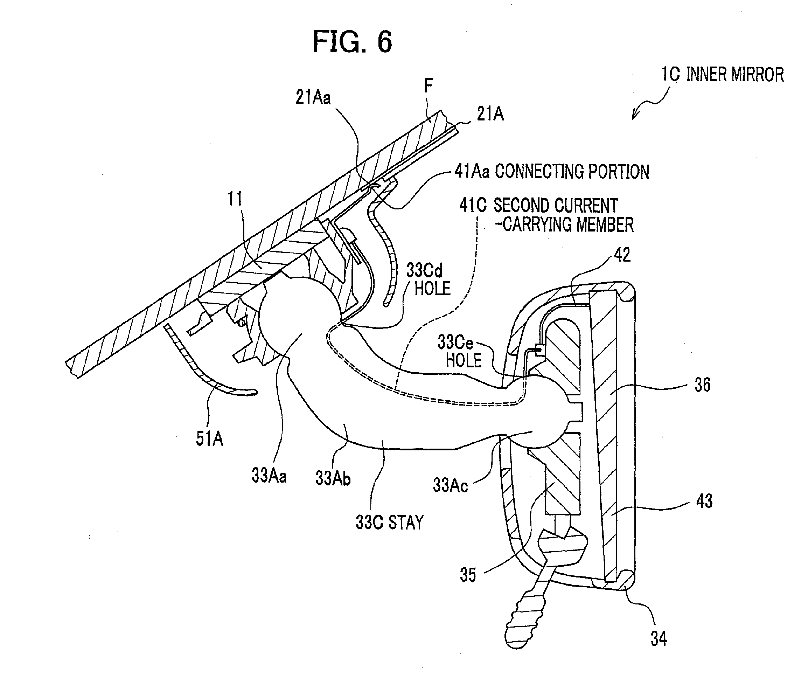

A description will be given of an electrical connecting structure in inner mirror according to a third embodiment of the present invention with reference to Fig. 6, focusing on differences from that of the inner mirror 1A according to the first embodiment. FIG. 6 is a cross-sectional side view depicting an inner mirror according to the third embodiment of the present invention subsequent to the installation.

An inner mirror 1C includes a stay 33C and a second current-carrying member 41C, instead of the stay 33A and the second current-carrying member 41A, and does not include the boot 52A.

The stay 33C has the pivot 33Aa provided with a hole 33Cd, and the pivot 33Ac provided with a hole 33Ce. The second current-carrying member 41C enters the hole 33Cd, passes through the interior of the stay 33C, and exists from the hole 33Ce. Such structure enables an omission of the boot 52A.

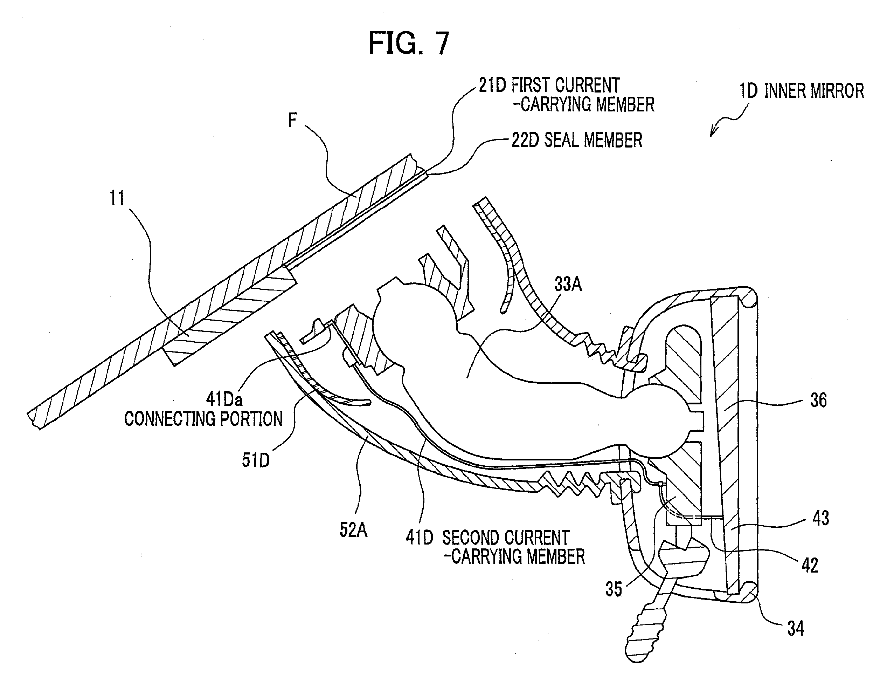

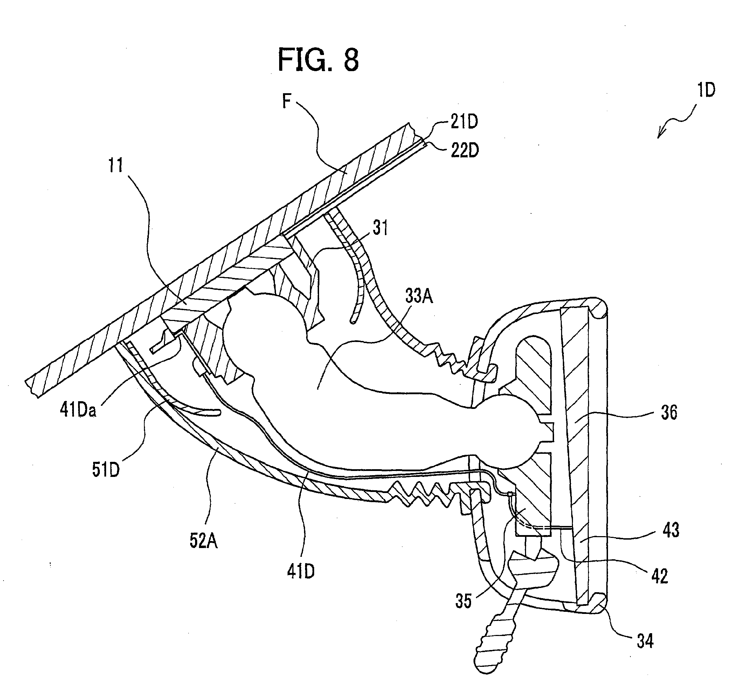

A description will be given of an electrical connecting structure in inner mirror according to a fourth embodiment of the present invention with reference to Figs. 7, 8, focusing on differences from that of the inner mirror 1A according to the first embodiment. FIG. 7 is a cross-sectional side view depicting an inner mirror according to the fourth embodiment of the present invention prior to the installation.

First, each individual component of the windshield F will be described. The windshield F is provided with a first current-carrying member 21D and a seal material 22, instead of the first current-carrying member 21A and the seal material 22A.

The first current-carrying member 21D is connected to the button 11 of the metal member, whereas the seal material 22D covers the whole of the first current-currying member 21D.

The inner mirror 1D is provided with a second current-carrying member 41D and a base cover 51D, instead of the second current-carrying member 41A and the base cover 51A.

The second current-carrying member 41D has a connecting portion 41Da which is fixed below the base 31.

The base cover 51D is configured without the higher portion 51Aa (refer to Fig. 1).

Next, an description will be given of an electrical connection in installation of the inner mirror 1D with reference to Fig. 8. As described above, sliding of the base 31 of the inner mirror 1D onto the button 11 allows the button 11 to come in contact with the connecting portion 41Da of the second current-carrying 41D, thereby establishing the electrical connection therebetween. As a result, the electrical-power driven portion 43 is supplied with power from a power supply external to the inner mirror 1D through the first current-carrying member 21D, the button 11, and the second and third current-carrying members 41D, 42.

The structure in the fourth embodiment enables establishment of the electrical connection more easily than that of the first embodiment in that the contactable area of the button 11 is wider than that of the connecting portion 21Aa.

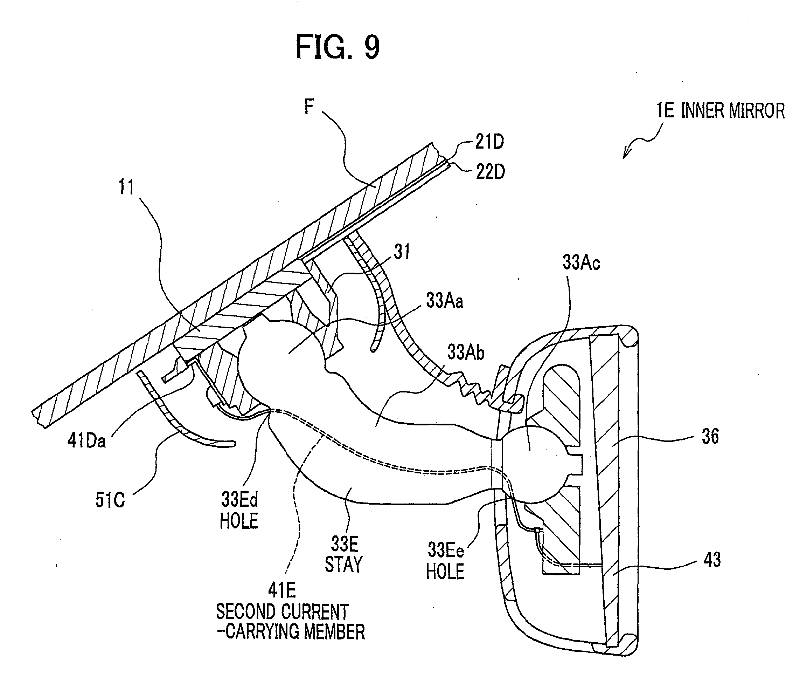

A description will be given of an electrical connection structure in an inner mirror according to a fifth embodiment of the present invention with reference to Fig. 9, focusing on differences from that of the inner mirror 1A according to the fourth embodiment. FIG. 9 is a cross-sectional side view depicting an inner mirror according to the fifth embodiment of the present invention subsequent to the installation.

An inner mirror 1E includes a stay 33E and a second current-carrying member 41E instead of the stay 33A and the second current-carrying member 41D, and is configured without the boot 52A.

The stay 33E has the pivot 33Aa provided with a hole 33Ed and the pivot 33Ac provided with a hole 33Ee. The second current-carrying member 41E enters the hole 33Ed, passes through the interior of the stay 33E, and exits from the hole 33Ee. Such structure enables an omission of the boot 52A.

Note that the present invention is not limited to the above embodiments, and variations and modifications may be made without departing from the scope of the present invention. For example, the attaching technique between the button 11 and the base 31 is not limited to the sliding manner shown in the figures, but may be any known manner (rotational or magnetic attachment). Further, the button 11 may not be a metal member as in the first, second and third embodiments. Alternatively, a structure without the base covers 51A, 51D may be employed.

Additionally, the electrical-power driven portion 43 is a member equipped with a liquid crystal device in the embodiments, but may be any member as long as being driven by means of electrical power.

The second current-carrying members 41A, 41B and 41D are adapted to be inserted into the hole 34a of the mirror housing 34a in the first, second and fourth embodiments, respectively. However, they may be inserted into another hole provided in the mirror housing 34. In this case, it is preferable that this hole is covered by the boot 52A.

Likewise, the boot 52A is not limited to one shown in the figures. The movable portions of the boot 52A may be increased in number. Further, it may have such a structure that the movable portion 52Ac and the end portion 52Ab are formed of flexible materials, and the portion aside the movable portion 52Ac and the end portion 52Ab is formed of a hard resin (e.g. polypropylene, etc.).

It should be noted that the present invention can be applied to various additional units for vehicles other than inner mirrors. Additional units to which the present invention is applied are any types of ones equipped with electrical-power driven portion required for routing members (current-carrying wires, etc), including cameras for photographing scenes inside or outside a vehicle, monitors for displaying images photographed outside a vehicle, or monitors for car navigations, for example.

## Claims

1. An electrical connection structure comprising:
an additional unit for a vehicle, which includes a base and an electrical-power driven portion;
an attachment to which the base is attachable, and which is provided on a main body of the vehicle;
a first current-carrying member which is routed along the main body of the vehicle, and which has a connecting portion near the attachment, the first current-carrying member being connected to a power source external to the additional unit; and
a second current-carrying member which is routed on the additional unit, and which has, around the base, a connecting portion connectable to the connecting portion of the first current-carrying member, the second current-carrying member being connected to the electrical-power driven portion,
wherein the electrical-power driven portion is supplied with electrical power from the power source through the first and second current-carrying members.

2. An electrical connection structure according to claim 1, wherein
the connecting portions of the first and second current-carrying members come in contact with each other by attaching the base to the attachment, thereby establishing an electrical connection between the first and second current-carrying members.

3. An electrical connection structure comprising:
an additional unit for a vehicle, which includes a base and an electrical-power driven portion;
an attachment to which the base is attachable, and which is provided on a main body of the vehicle;
a first current-carrying member which is routed along the main body of the vehicle, and which is connected to the attachment and a power source external to the additional unit; and
a second current-carrying member which is routed on the additional unit, and which has, around the base, a connecting portion connectable to the attachment, the second current-carrying member being connected to the electrical-power driven portion,
wherein the electrical-power driven portion is supplied with electrical power from the power source through the first current-carrying member, the attachment and the second current-carrying member.

4. An electrical connection structure according to claim 3, wherein
the attachment and the connecting portion of the second current-carrying member come in contact with each other by attaching the base to the attachment, thereby establishing an electrical connection between the attachment and the second current-carrying member.

5. An electrical connection structure comprising:
an inner mirror which includes a base and an electrical-power driven portion;
an attachment to which the base is attachable, and which is provided on a main body of the vehicle;
a first current-carrying member which is routed along the main body of the vehicle, and which has a connecting portion near the attachment, the first current-carrying member being connected to a power source external to the inner mirror; and
a second current-carrying member which is routed on the inner mirror, and which has, around the base, a connecting portion connectable to the connecting portion of the first current-carrying member, the second current-carrying member being connected to the electrical-power driven portion,
wherein the electrical-power driven portion is supplied with electrical power from the power source through the first and second current-carrying members.

6. An electrical connection structure according to claim 5, wherein
the connecting portions of the first and second current-carrying members come in contact with each other by attaching the base to the attachment, thereby establishing an electrical connection between the first and second current-carrying members.

7. An electrical connection structure comprising:
an inner mirror which includes a base and an electrical-power driven portion;
an attachment to which the base is attachable, and which is provided on a main body of the vehicle;
a first current-carrying member which is routed along the main body of the vehicle, and which is connected to the attachment and a power source external to the inner mirror; and
a second current-carrying member which is routed on the inner mirror, and which has, around the base, a connecting portion connectable to the attachment, the second current-carrying member being connected to the electrical-power driven portion,
wherein the electrical-power driven portion is supplied with electrical power from the power source through the first current-carrying member, the attachment and the second current-carrying member.

8. An electrical connection structure according to claim 7, wherein
the attachment and the connecting portion of the second current-carrying member come in contact with each other by attaching the base to the attachment, thereby establishing an electrical connection between the attachment and the second current-carrying member.
